# EUROPÄISCHE PATENTANMELDUNG

(11) **EP 2 816 515 A1**
(43) Veröffentlichungstag der Anmeldung: **24.12.2014**
(21) Anmeldenummer: 13003095.0
(22) Anmeldetag: 18.06.2013
(51) Int. Cl.: G06Q 20/18, G06Q 20/32, G06Q 20/38, G06Q 20/20

(54) **Verfahren und System zum Bezahlen von Produkten an einem Verkaufsautomaten mit einem Mobilendgerät**

(71) Anmelder: Crane Payment Solutions GmbH, 21614 Buxtehude (DE)
(72) Erfinder: Göpel, Stig, 21756 Osten (DE); Buschmann, Horst, 21698 Harsefeld (DE)
(74) Vertreter: Mönkemeyer, Philipp

(57) **Zusammenfassung**

Die Erfindung betrifft ein Verfahren zum Bezahlen von Produkten an einem Verkaufsautomaten mit einem Mobilendgerät, wobei das Mobilendgerät während des Bezahlvorgangs nicht mit einem Mobilfunknetz verbunden sein muss, umfassend die Schritte: über jeweils eine Nahbereichsschnittstelle wird von dem Mobilendgerät ein Transaktionspin zu einer Verarbeitungseinrichtung des Verkaufsautomaten übermittelt, von der Verarbeitungseinrichtung wird der Transaktionspin über eine Datenverbindung zu einer entfernt vom Verkaufsautomaten befindlichen Dienstzentrale übermittelt, die Dienstzentrale überprüft den Transaktionspin auf Gültigkeit und übermittelt bei gültigem Transaktionspin eine Freigabe für den Transaktionspin über die Datenverbindung an die Verarbeitungseinrichtung des Verkaufsautomaten, aufgrund eines von dem Benutzer des Mobilendgeräts ausgewählten Produkts wird von der Verarbeitungseinrichtung des Verkaufsautomaten über die Datenverbindung ein Bezahlbetrag für das ausgewählte Produkt an die Dienstzentrale übermittelt, das von dem Benutzer des Mobilendgeräts ausgewählte Produkt wird an den Benutzer des Mobilendgeräts ausgeliefert. Die Erfindung betrifft außerdem ein entsprechendes System.

## Beschreibung

Die Erfindung betrifft ein Verfahren und ein System zum Bezahlen von Produkten an einem Verkaufsautomaten mit einem Mobilendgerät, wobei das Mobilendgerät während des Bezahlvorgangs nicht mit einem Mobilfunknetz verbunden sein muss.

Das Bezahlen von Produkten an Verkaufsautomaten mit Mobiltelefonen oder ähnlichen Mobilendgeräten gewinnt stetig an Bedeutung. Gegenüber einer konventionellen Bezahlung mit Bargeld oder Kreditkarten hat das mobile Bezahlen einige Vorteile. So müssen einerseits weder der Kunde noch der Verkaufsautomat (auch Point of Sale) entsprechendes Bargeld vorrätig halten. Dies bringt logistische Erleichterungen, insbesondere für die Betreiber der Verkaufsautomaten. Das Bezahlen von Produkten an einem Verkaufsautomaten mit Kreditkarte oder auch ein mobiles Kreditkartensimulationsverfahren ist gerade bei geringen Verkaufspreisen von weniger als 5 Euro für den Betreiber des Verkaufsautomaten wenig lukrativ, da jeweils vergleichsweise hohe Transaktionsgebühren anfallen. Außerdem bleibt der Kunde während des Verkaufs an einem Verkaufsautomaten per Barzahlung oder Kreditkarte anonym, so dass der Betreiber des Verkaufsautomaten keine Kundenbeziehung zu dem Käufer, beispielsweise im Rahmen sogenannter Loyalty-Programme, aufbauen kann. Käufer können sich an einem Verkaufsautomaten auch mittels ihres Mobiltelefons identifizieren, zum Beispiel per Kreditkartennummer. Das Mobiltelefon muss dazu allerdings während des Bezahlvorgangs mit einem Mobilfunknetz verbunden sein. Außerdem besteht das Risiko, dass die Identifikation des Mobiltelefons kopiert wird oder das Mobiltelefon verloren geht oder entwendet wird. In beiden Fällen kann Missbrauch die Folge sein.

Aus EP 1 281 137 B1 ist ein mobiles Bezahlverfahren bekannt, bei dem ein Point of Sale ein Selektionsprogramm an ein Mobilendgerät schickt. Der Kunde wählt in dem Selektionsprogramm ein Produkt aus. Anschließend werden eine Dienstterminal-ID des Verkaufsautomaten und eine Produkt-ID des ausgewählten Produkts von dem Mobilendgerät über das Mobilfunknetz an einen Server geschickt. Der Server schickt einen entsprechenden Kreditbeleg an den Point of Sale und der Point of Sale gibt das Produkt aus. Weiterhin ist aus EP 1 245 010 B1 ein Bezahlverfahren bekannt, bei dem ein Mobilendgerät genutzt wird, um eine Verbindung zu einem Server per Telefon herzustellen. Eine dezidierte Verbindung des Verkaufsautomaten zu dem Server besteht nicht. Über das Mobilendgerät wird über das Mobilfunknetz eine Kaufanfrage an einen Server gesendet und der Server übermittelt einen entsprechenden Verkaufscode an das Mobilendgerät, welches diesen wiederum an den Point of Sale übermittelt. Der Point of Sale veranlasst dann die Produktausgabe. Bei beiden vorbekannten Verfahren ist es nachteilig, dass das Mobilendgerät während des Bezahlvorgangs mit dem Mobilfunknetz verbunden sein muss. Gerade bei in unterirdischen Geschossen von Unternehmen aufgestellten Verkaufsautomaten oder bei Verkaufsautomaten in Parktiefgaragen besteht oftmals keine oder keine ausreichende Mobilfunknetzverbindung.

Aus EP 2 061 001 A1 ist ein mobiles Bezahlverfahren bekannt, bei dem weder der Verkaufsautomat noch das Mobilendgerät während des Bezahlvorgangs über eine externe Datenverbindung verfügen müssen. Um dennoch eine Prüfung des von dem Benutzer des Mobilendgeräts gewünschten Bezahlvorgangs zu ermöglichen, werden in dem Mobilendgerät Kredit- und Belegdaten des Benutzers gespeichert. Solche Kredit- oder Belegdaten umfassen insbesondere eine Identifikation des Benutzers einschließlich seiner Bezahldaten, beispielsweise seiner Bankkontodaten. Die Kredit- und Belegdaten sollen bei dem bekannten Verfahren verschlüsselt in einem Belegdatenspeicher des Mobilendgeräts abgespeichert werden. Es besteht allerdings dennoch ein Risiko, dass die Kredit- und Belegdaten aus dem Belegdatenspeicher ausgelesen werden und ein Missbrauch dieser Daten erfolgt. Eine sichere Speicherung der Kredit- oder Belegdaten ist damit nicht gewährleistet. Es gibt auch bereits Lösungen von Mobiltelefonanbietern, die den Missbrauch unterbinden sollen, beispielsweise sogenannte Secure Elements (SE) oder Speicher auf der Mobilfunk-SIM-Karte (UICC), in denen dann jeweils die Kredit- und Belegdaten gespeichert werden. Allerdings handelt es sich hier nicht um standardisierte Lösungen, so dass die Nutzung des mobilen Bezahlverfahrens nur mit Mobilfunkgeräten bestimmter Netzanbieter bzw. nur mit bestimmten Mobiltelefonen möglich ist. Ein weiterer Nachteil ist, dass die Transaktion anonym erfolgt, der Benutzer des Mobilendgeräts seine Identität gegenüber dem Verkaufsautomaten also nicht offenlegt. Hierdurch ist es, wie bereits erläutert, für den Betreiber des Verkaufsautomaten nicht möglich, eine Kundenbeziehung zu dem Käufer aufzubauen.

Ausgehend von dem erläuterten Stand der Technik liegt der Erfindung die Aufgabe zugrunde, ein Verfahren und ein System zum Bezahlen von Produkten an einem Verkaufsautomaten mit einem Mobilendgerät bereitzustellen, bei dem das Mobilendgerät während des Bezahlvorgangs nicht mit einem Mobilfunknetz verbunden sein muss, jedoch trotzdem eine gegen Missbrauch weitestgehend abgesicherte Bezahlung ohne Einschränkungen hinsichtlich des Mobilfunknetzanbieters oder eines genutzten Mobilendgeräts möglich ist.

Die Erfindung löst die Aufgabe durch die Gegenstände der unabhängigen Ansprüche 1 und 14. Vorteilhafte Ausgestaltungen finden sich in den abhängigen Ansprüchen, der Beschreibung und den Figuren.

Die Erfindung löst die Aufgabe einerseits durch ein Verfahren zum Bezahlen von Produkten an einem Verkaufsautomaten mit einem Mobilendgerät, wobei das Mobilendgerät während des Bezahlvorgangs nicht mit einem Mobilfunknetz verbunden sein muss, umfassend die Schritte: über jeweils eine Nahbereichsschnittstelle wird von dem Mobilendgerät ein Transaktionspin zu einer Verarbeitungseinrichtung des Verkaufsautomaten übermittelt, von der Verarbeitungseinrichtung wird der Transaktionspin über eine Datenverbindung zu einer entfernt vom Verkaufsautomaten befindlichen Dienstzentrale übermittelt, die Dienstzentrale überprüft den Transaktionspin auf Gültigkeit und übermittelt bei gültigem Transaktionspin eine Freigabe für den Transaktionspin über die Datenverbindung an die Verarbeitungseinrichtung des Verkaufsautomaten, aufgrund eines von dem Benutzer des Mobilendgeräts ausgewählten Produkts wird von der Verarbeitungseinrichtung des Verkaufsautomaten über die Datenverbindung ein Bezahlbetrag für das ausgewählte Produkt an die Dienstzentrale übermittelt, das von dem Benutzer des Mobilendgeräts ausgewählte Produkt wird an den Benutzer des Mobilendgeräts ausgeliefert.

Außerdem löst die Erfindung die Aufgabe durch ein System zum Bezahlen von Produkten an einem Verkaufsautomaten mit einem Mobilendgerät, wobei das Mobilendgerät während des Bezahlvorgangs nicht mit einem Mobilfunknetz verbunden sein muss, umfassend: ein Mobilendgerät mit einer Nahbereichsschnittstelle und einen Verkaufsautomaten mit einer Verarbeitungseinrichtung und einer Nahbereichsschnittstelle, wobei die Verarbeitungseinrichtung dazu ausgebildet ist, über die Nahbereichsschnittstellen einen Transaktionspin von dem Mobilendgerät zu empfangen, eine entfernt vom Verkaufsautomaten befindliche Dienstzentrale, wobei zwischen dem Verkaufsautomaten und der Dienstzentrale eine Datenverbindung besteht, und wobei die Verarbeitungseinrichtung dazu ausgebildet ist, den Transaktionspin über die Datenverbindung zu der Dienstzentrale zu übermitteln, wobei die Dienstzentrale dazu ausgebildet ist, den Transaktionspin auf Gültigkeit zu überprüfen und bei gültigem Transaktionspin eine Freigabe für den Transaktionspin über die Datenverbindung an die Verarbeitungseinrichtung des Verkaufsautomaten zu übermitteln, wobei die Verarbeitungseinrichtung weiter dazu ausgebildet ist, aufgrund eines von dem Benutzer des Mobilendgeräts ausgewählten Produkts über die Datenverbindung einen Bezahlbetrag für das ausgewählte Produkt an die Dienstzentrale zu übermitteln, und wobei der Verkaufsautomat dazu ausgebildet ist, das von dem Benutzer des Mobilendgeräts ausgewählte Produkt an den Benutzer des Mobilendgeräts auszuliefern.

Der erfindungsgemäß verwendete Verkaufsautomat umfasst jeglichen Point of Sale, an dem eine automatische Bezahlung von Produkten möglich ist. Dies kann ein klassischer Verkaufsautomat für Lebensmittel oder Fahrkarten für Verkehrsmittel oder ähnliches sein. Es kann auch ein Verkaufsautomat an einer Werkskantine eines Unternehmens sein, an dem Kantinenessen erworben werden kann. Auch kann es sich beispielsweise um einen Verkaufsautomaten handeln, der einen Zugang zu bestimmten Bereichen, beispielsweise öffentlichen WC's oder ähnlichem bereitstellt. Die an dem Verkaufsautomaten zu erwerbenden Produkte umfassen sowohl gegenständliche Produkte als auch Dienstleistungen, zum Beispiel die Verschaffung eines Zugangs wie angesprochen. Der Verkaufsautomat kann ein Eingabeterminal aufweisen, an dem der Käufer ein gewünschtes Produkt auswählen kann. Es ist jedoch auch möglich, dass die Auswahl des Produkts zum Beispiel mittels einer auf dem Mobilendgerät ausgeführten Auswahlapplikation und anschließender Übertragung über die Nahbereichsschnittstellen an die Verarbeitungseinrichtung des Verkaufsautomaten erfolgt.

Bei der Erfindung wird im Gegensatz zu dem oben erläuterten bekannten Bezahlverfahren aus EP 2 061 001 A1 eine Datenverbindung des Verkaufsautomaten zu einer Dienstzentrale vorausgesetzt. Allerdings ermöglichen das erfindungsgemäße Verfahren und das erfindungsgemäße System die Durchführung eines Bezahlvorgangs, ohne dass das Mobilendgerät während des Bezahlvorgangs eine Mobilfunkverbindung besitzen muss. Die Erfindung ist somit insbesondere in Bereichen einsetzbar, in denen kein oder nur unzureichender Mobilfunkempfang besteht. Vielmehr besitzen das Mobilendgerät und der Verkaufsautomat jeweils mindestens eine von einem Mobilfunknetz unabhängige Nahbereichsschnittstelle. Natürlich können der Verkaufsautomat und das Mobilendgerät auch jeweils mehrere Schnittstellen besitzen. Für verschiedene bei dem erfindungsgemäßen Verfahren eingesetzte Datenübertragungen per Nahbereichs-schnittstellen können dann auch unterschiedliche Nahbereichsschnittstellen genutzt werden. Diese Nahbereichsschnittstellen werden zur Datenübertragung zwischen dem Mobilendgerät und der Verarbeitungseinrichtung des Verkaufsautomaten genutzt. So wird erfindungsgemäß von dem Mobilendgerät ein Transaktionspin über die Nahbereichsschnittstellen an die Verarbeitungseinrichtung des Verkaufsautomaten übermittelt. Dieser Transaktionspin wird anschließend von der Verarbeitungseinrichtung über die Datenverbindung des Verkaufsautomaten zur Überprüfung auf Gültigkeit an die Dienstzentrale übermittelt. Sofern der Transaktionspin gültig ist, wird eine entsprechende Freigabe von der Dienstzentrale an die Verarbeitungseinrichtung des Verkaufsautomaten übermittelt. Das von dem Benutzer des Mobilendgeräts ausgewählte Produkt kann dann entsprechend bezahlt und ausgeliefert werden. Ein Bezahlbetrag des ausgewählten Produkts wird von der Verarbeitungseinrichtung des Verkaufsautomaten wiederum über die Datenverbindung an die Dienstzentrale übersandt, die dies zu dem Transaktionspin entsprechend abspeichern kann. Sollte ein Transaktionspin wegen Ungültigkeit abgelehnt werden, erfolgt vorzugsweise ebenfalls eine entsprechende Benachrichtigung durch die Dienstzentrale an die Verarbeitungseinrichtung des Verkaufsautomaten. Diese gibt dann eine entsprechende Nachricht mit der Ablehnung aus, beispielsweise optisch auf einer Anzeigeeinrichtung des Verkaufsautomaten oder über die Nahbereichsschnittstellen an das Mobilendgerät.

Durch die erfindungsgemäße Nutzung von Transaktionspins kann eine dynamische Pinnutzung erfolgen. Der Transaktionspin, der zum Beispiel in Form einer Nummer oder eines Barcodes vorliegen kann, enthält keine Kredit- oder Belegdaten, also keine sensitiven Bezahldaten des Benutzers wie Bankkontodaten oder Daten über abgewickelte Transaktionen oder ähnliches. Die Zuordnung des Transaktionspins zu den Bezahldaten des Benutzers erfolgt erst durch die Dienstzentrale. In der Dienstzentrale, und insbesondere nur in der Dienstzentrale, ist diese Zuordnung des Transaktionspins zu Bezahldaten des Kunden, zum Beispiel Bankkontodaten, Geldüberweisungsdaten oder Bareinzahldaten des Kunden bei der Dienstzentrale bzw. einem mit der Dienstzentrale verbundenen Kreditinstitut etc. möglich. Ein Guthaben des Benutzers für eine erfindungsgemäße Transaktion muss bei der Dienstzentrale bzw. einem mit der Dienstzentrale verbundenen Kreditinstitut also nicht über ein Bankkonto bzw. entsprechende Bankkontodaten des Benutzers generiert werden. Vielmehr kann der Benutzer auch eine Bezahleinrichtung bei der Dienstzentrale bzw. einem mit der Dienstzentrale verbundenen Kreditinstitut oder auch am Verkaufsautomaten selbst für eine Bareinzahlung (Münz- oder Banknoteneinzahlung) nutzen, die dann das Guthaben bei der Dienstzentrale bzw. einem mit der Dienstzentrale verbundenen Kreditinstitut für die anschließende Transaktion bildet. Auch denkbar zu diesem Zweck ist eine Geldüberweisung an die Dienstzentrale bzw. an ein mit der Dienstzentrale verbundenes Kreditinstitut.

Es werden in dem Mobilendgerät erfindungsgemäß also keine Daten gespeichert, anhand derer ein von den jeweiligen Begrenzungen des Transaktionspins losgelöster Kreditmissbrauch möglich ist. Dadurch wird eine erhöhte Sicherheit beispielsweise bei einem Verlust oder einem Diebstahl des Mobilendgeräts erreicht. Es ist lediglich die Nutzung eines auf dem Mobilendgerät befindlichen Transaktionspins für zum Beispiel eine Transaktion und/oder einen begrenzten Bezahlbetrag möglich. Auch eine Begrenzung des Transaktionspins auf bestimmte Transaktionen, zum Beispiel eine Bezahlung an einer bestimmten Werkskantine oder an einem bestimmten Lebensmittelautomaten ist möglich. Es ist also ein geschlossenes Bezahlsystem realisierbar, das eine Bezahlung nur für bestimmte Verkaufsautomaten zulässt. Dies können zum Beispiel nur Verkaufsautomaten sein, die bei bestimmten Unternehmen aufgestellt sind oder nur Verkaufsautomaten bestimmter Anbieter. Ein ungültiger Transaktionspin, beispielsweise weil er bereits für einen Einkauf verbraucht wurde, ist anschließend nicht mehr für einen weiteren Bezahlvorgang einsetzbar. Die Ungültigkeit ist in der Dienstzentrale gespeichert und kann durch einen nichtautorisierten Benutzer des Mobilendgeräts nicht manipuliert werden. Vielmehr muss dann durch den Benutzer des Mobilendgeräts ein neuer Transaktionspin auf das Mobilendgerät geladen werden. Das erfindungsgemäße Verfahren und das erfindungsgemäße System benötigen somit keinen besonders gesicherten Speicher auf dem Mobilendgerät, da auf dem Mobilendgerät keine sensitiven Bezahldaten des Benutzers gespeichert werden müssen. Entsprechend unterliegt die Erfindung auch nicht den oben erläuterten Einschränkungen des Standes der Technik hinsichtlich bestimmter Mobilfunkanbieter oder bestimmter Mobilendgeräte.

Ein weiterer Vorteil der Erfindung liegt darin, dass der im Stand der Technik anonyme Kunde sich bei dem erfindungsgemäßen Bezahlsystem in der unten noch zu erläuternden Weise vor der erstmaligen Verwendung des Verfahrens bzw. Systems bei dem jeweiligen Produktanbieter registriert und diese Registrierdaten in der Dienstzentrale hinterlegt werden können. Die Registrierdaten können anschließend in der Dienstzentrale in Verbindung gesetzt werden zu einem bestimmten Kaufverhalten des Benutzers des Mobilendgeräts. Hierdurch kann durch den Produktanbieter gezielt eine Kundenbeziehung aufgebaut werden, beispielsweise um das mobile Bezahlsystem mit Loyalty-Programmen des Produktanbieters zu verbinden, Produktwerbung zu platzieren, Bonusprogramme auszuführen etc.

Die Datenverbindung zwischen der Verarbeitungseinrichtung und der Dienstzentrale kann zum Beispiel eine LAN- oder Wireless-Internetverbindung sein. Es ist aber auch eine Kabelverbindung möglich, so dass kein Funkbetrieb erforderlich ist. Dies hat zum Vorteil, dass der Verkaufsautomat auch in Krankenhäusern, etc. eingesetzt werden kann, wo kein Funksignal vorhanden ist. Dies gilt insbesondere in Verbindung mit dem erfindungsgemäßen Vorteil, dass das Mobiltelefon während einer Transaktion nicht online sein muss, also nicht über eine Mobilfunkverbindung verfügen muss. Im Stand der Technik wird als Nachteil hervorgehoben, dass der Verkaufsautomat online sein muss und dies kostspielig sei. Dieser Nachteil ist jedoch als gering zu bewerten, da per Kabel die Verkaufsautomaten in einfacher Weise mit einem LAN-Netz verbunden werden können und nicht ausschließlich auf Funk angewiesen sind. Eine LAN-Verbindung per Kabel ist auch kostengünstig für die Verarbeitungseinrichtung, da in dieser Sicht kein zusätzliches Funkmodul benötigt wird. Die Datenübertragung zwischen der Verarbeitungseinrichtung der Dienstzentrale erfolgt zum Schutz gegen Manipulation vorzugsweise verschlüsselt. Die Dienstzentrale kann einen Server aufweisen, der mit einem Kreditinstitut oder ähnlichem verbunden ist. Die Dienstzentrale kann auch direkt bei einem Kreditinstitut oder ähnlichem Buchungssystem lokalisiert sein. Die Dienstzentrale kann über die Datenverbindung eine Bestätigung an die Verarbeitungseinrichtung des Verkaufsautomaten über eine erfolgte Kostenabbuchung zu einer getätigten Transaktion senden.

Nach einer Ausgestaltung kann der Transaktionspin nur für einen Bezahlvorgang bis zu einem Maximalbetrag gültig sein. Ein solcher Maximalbetrag für den Kaufpreis eines Produkts bietet einen besonders sicheren Schutz, da ein Missbrauch bei einem Verlust des Mobilendgeräts oder einem anderweitigen Verlust des Transaktionspins nur bis zu dem jeweiligen Maximalbetrag möglich ist. Zum Beispiel bei Verkaufsautomaten, deren Produkte einen bestimmten Grenzbetrag nie überschreiten, kann der Maximalbetrag auf den Grenzbetrag oder zum Beispiel etwas höher gesetzt werden, um den Kunden den Erwerb jeglicher Produkte des Verkaufsautomaten zu ermöglichen. Der Maximalbetrag kann in der Dienstzentrale zu dem Transaktionspin gespeichert sein. Hierdurch wird eine besonders hohe Sicherheit erreicht, da der Maximalbetrag nicht manipuliert werden kann. Es ist jedoch auch denkbar, den Maximalbetrag gegebenenfalls codiert in dem Mobilendgerät oder dem Transaktionspin zu hinterlegen.

Es ist weiterhin möglich, dass in der Verarbeitungseinrichtung des Verkaufsautomaten zu einer Transaktion ein Kredit simuliert wird, der höher ist als der höchste Verkaufspreis der in dem Verkaufsautomaten angebotenen Produkte. Der Käufer kann dann jedes Produkt an dem Verkaufsautomaten erwerben. Erfolgt ein Erwerb eines Produkts, so übermittelt die Verarbeitungseinrichtung den entsprechenden Bezahlbetrag an die Dienstzentrale. Die Dienstzentrale gibt eine Bestätigung hinsichtlich des Erhalts und der erfolgreichen Kostenabbuchung an die Verarbeitungseinrichtung im Verkaufsautomaten zurück. Die Verarbeitungseinrichtung vermerkt dann, dass der Restkredit des simulierten Kredits nach Abzug des Bezahlbetrags zurückgezahlt wurde und die Transaktion entsprechend abgeschlossen ist. Der Verkaufsautomat betrachtet die Transaktion also wie einen Bar- oder Kartenverkauf.

Es ist nach einer weiteren Ausgestaltung möglich, dass der Bezahlbetrag von der Verarbeitungseinrichtung des Verkaufsautomaten zusammen mit dem Transaktionspin über die Datenverbindung an die Dienstzentrale übermittelt wird, wobei die Dienstzentrale den übermittelten Bezahlbetrag mit dem Maximalbetrag vergleicht und die Freigabe für den Transaktionspin nur übermittelt, wenn der Bezahlbetrag den Maximalbetrag nicht übersteigt.

Auch ist es möglich, dass die Dienstzentrale bei gültigem Transaktionspin auch den Maximalbetrag über die Datenverbindung an die Verarbeitungseinrichtung des Verkaufsautomaten übermittelt, wobei die Verarbeitungseinrichtung des Verkaufsautomaten den Bezahlbetrag für ein von dem Benutzer des Mobilendgeräts ausgewähltes Produkt mit dem Maximalbetrag vergleicht und die Übermittlung des Bezahlbetrags an die Dienstzentrale sowie die Auslieferung des Produkts nur erfolgt, wenn der Bezahlbetrag den Maximalbetrag nicht übersteigt.

In beiden vorgenannten Ausgestaltungen kann bei Überschreiten des jeweilig festgelegten Maximalbetrags eine entsprechende Benachrichtigung an den Benutzer des Mobilendgeräts in der oben zu der Benachrichtigung bei ungültigem Transaktionspin erläuterten Weise vorzugsweise ausgegeben werden.

Der Transaktionspin kann nach einer weiteren Ausgestaltung nur für einen einzigen Bezahlvorgang gültig sein. Hierdurch wird eine besonders große Sicherheit gegenüber Missbrauch erreicht. Es ist bei leicht verringerter Sicherheit, jedoch erhöhter Benutzerfreundlichkeit auch möglich, dass der Transaktionspin nur für eine vorab festgelegte begrenzte Anzahl von Bezahlvorgängen gültig ist. Auch ist es denkbar, dass der Transaktionspin nur für einen begrenzten Zeitraum gültig ist.

Nach einer weiteren Ausgestaltung kann der mindestens eine Transaktionspin in einem dem Bezahlvorgang vorausgehenden Verfahrensschritt von der Dienstzentrale über ein Mobilfunknetz auf das Mobilendgerät übertragen werden. Das Übertragen des mindestens einen Transaktionspins erfolgt vorzugsweise passwortgeschützt und/oder verschlüsselt. Das Herunterladen eines Transaktionspins erfolgt also beispielsweise nach einem ausgeführten Bezahlvorgang und vor einem erneuten Bezahlvorgang. Das Herunterladen eines Transaktionspins auf das Mobilendgerät kann vorzugsweise an einem von dem Verkaufsautomaten entfernten Ort erfolgen, an dem ein ausreichender Mobilfunkempfang besteht. Es ist dabei auch möglich, einen Vorrat an mehreren Transaktionspins auf das Mobilendgerät zu laden. Anschließend kann in der oben erläuterten Weise mit den Transaktionspins ein Kauf von Produkten an einem Verkaufsautomaten unabhängig von einer Mobilfunkverbindung erfolgen. Das Herunterladen der Transaktionspins kann jeweils auf Anforderung durch den Benutzer des Mobilendgeräts, beispielsweise mittels einer geeigneten Registrierapplikation, erfolgen. Es ist jedoch auch denkbar, dass bei nicht mehr gültigen Transaktionspins auf dem Mobilendgerät automatisch neue Transaktionspin von der Dienstzentrale heruntergeladen werden. Auch das automatische Herunterladen kann passwortgeschützt und/oder verschlüsselt erfolgen. Es ist jedoch auch ein vollautomatisches Herunterladen ohne eine entsprechende Passwortabfrage, gegebenenfalls mit einer Verschlüsselung, denkbar.

Nach einer weiteren Ausgestaltung kann vorgesehen sein, dass von der Verarbeitungseinrichtung des Verkaufsautomaten vor dem Übertragen des mindestens einen Transaktionspins eine Registrierapplikation oder ein Link auf eine Registrierapplikation über jeweils eine Nahbereichsschnittstelle auf das Mobilendgerät übertragen wird, wobei das anschließende Übertragen des mindestens einen Transaktionspins durch ein Ausführen der Registrierapplikation auf dem Mobilendgerät gesteuert wird. Weiterhin ist es möglich, dass durch die Registrierapplikation bei erstmaliger Ausführung auf dem Mobilendgerät Kreditdaten des Benutzers des Mobilendgeräts aufgenommen und über ein Mobilfunknetz des Mobilendgeräts an die Dienstzentrale übermittelt und in der Dienstzentrale gespeichert werden, insbesondere Daten zur Identifizierung des Benutzers des Mobilendgeräts und/oder Bankkontodaten des Benutzers des Mobilendgeräts und/oder Guthabendaten des Benutzers des Mobilendgeräts. Die dabei genutzten Nahbereichsschnittstellen können dieselben sein, die für die Übertragung des Transaktionspins genutzt werden oder auch andere Nahbereichsschnittstellen. Die Registrierapplikation dient einerseits für die erstmalige Registrierung eines Benutzers eines Mobilendgeräts für das erfindungsgemäße Transaktionsverfahren bzw. Transaktionssystem. Hierfür wird die Registrierapplikation zunächst auf dem Mobilendgerät ausgeführt. Beispielsweise kann ein zu der Registrierapplikation führender Internetlink per Nahbereichsschnittstelle von dem Verkaufsautomaten auf das Mobilendgerät übertragen werden. Die Übertragung des Links kann jedoch auch beispielsweise durch Auslesen eines am Verkaufsautomaten angebrachten Barcodes durch das Mobilendgerät erfolgen. In diesem Fall bildet der Barcode die Nahbereichsschnittstelle des Verkaufsautomaten und eine Auslesekamera die Nahbereichsschnittstelle des Mobilendgeräts. Auch kann der Link als Internetadresse beispielsweise als Werbung auf einem Aufkleber am Verkaufsautomaten angebracht sein und somit die Nahbereichsschnittstelle bilden. Die entsprechende Eingabemöglichkeit des Mobilendgeräts bildet dann die Nahbereichsschnittstelle des Mobilendgeräts. Der Link führt den Benutzer auf die Internetseite des jeweiligen Bezahl-Dienstleistungsanbieters zum Download der Registrierapplikation. Bei anschließender Ausführung der Registrierapplikation führt diese den Benutzer durch den Registriervorgang, bei dem die entsprechenden Bezahldaten des Benutzers aufgenommen und in der Dienstzentrale gespeichert werden, beispielsweise Daten zur Internetbezahlung, Bankkontodaten, Identifikation des Käufers, Benutzername und Passwort des Käufers zum Ausführen der Registrierapplikation etc. Nach Ausführen des Registriervorgangs können durch den Benutzer Transaktionspins auf das Mobilendgerät geladen werden. Mittels seiner Zugangs-ID kann der Benutzer sich dazu über die Registrierapplikation bei der Dienstzentrale wiederholt anmelden.

In besonders praxisgemäßer Weise kann das Mobilendgerät ein Mobiltelefon, insbesondere ein Smartphone, ein Personal Digital Assistant (PDA) oder ein Tablet-PC sein.

Nach einer weiteren besonders praxisgemäßen Ausgestaltung kann die Übermittlung des Transaktionspins und/oder der Registrierapplikation und/oder des Links für die Registrierapplikation über die Nahbereichsschnittstellen per Near-Field-Communication (NFC), BlueTooth-Übertragung, Infrarot-Übertragung, Auslesen eines RFID-Transponders, Auslesen eines Barcodes, per Wireless-Netzwerk oder per Eingabe in ein Eingabeterminal erfolgen. Beispielsweise bei einem Auslesen eines RFID-Transponders des Mobilendgeräts oder eines auf dem Mobilendgerät dargestellten Barcodes stellen der RFID-Transponder bzw. der Barcode gegebenenfalls gemeinsam mit dem jeweiligen Display des Mobilendgeräts die Nahbereichsschnittstelle des Mobilendgeräts dar. Die Nahbereichsschnittstelle des Verkaufsautomaten stellen dann entsprechend die Auslesemittel zum Auslesen des RFID-Transponders oder Barcodes dar. Im Fall der Eingabe des Transaktionspins durch den Benutzer in ein Eingabeterminal des Verkaufsautomaten stellt das Eingabeterminal entsprechend die Nahbereichsschnittstelle des Verkaufsautomaten dar. Die Nahbereichsschnittstelle des Mobilendgeräts ist in diesem Fall zum Beispiel ein Display, auf dem der von dem Benutzer in das Eingabeterminal eingegebene Transaktionspin angezeigt wird.

Das erfindungsgemäße System kann insbesondere zur Durchführung des erfindungsgemäßen Verfahrens geeignet sein. Insbesondere sind dann der Verkaufsautomat, die Verarbeitungseinrichtung, das Mobilendgerät und die Dienstzentrale in geeigneter Weise ausgebildet, um die jeweiligen Verfahrensschritte durchzuführen.

Ein Ausführungsbeispiel der Erfindung wird nachfolgend anhand von Figuren näher erläutert. Es zeigen schematisch:
- Fig. 1: ein erfindungsgemäßes System in einem ersten Verfahrenszustand,
- Fig. 2: einen Teil des in Fig. 1 gezeigten erfindungsgemäßen Systems in einem zweiten Verfahrenszustand, und
- Fig. 3: das in Fig. 1 gezeigte erfindungsgemäße System in einem dritten Verfahrenszustand.

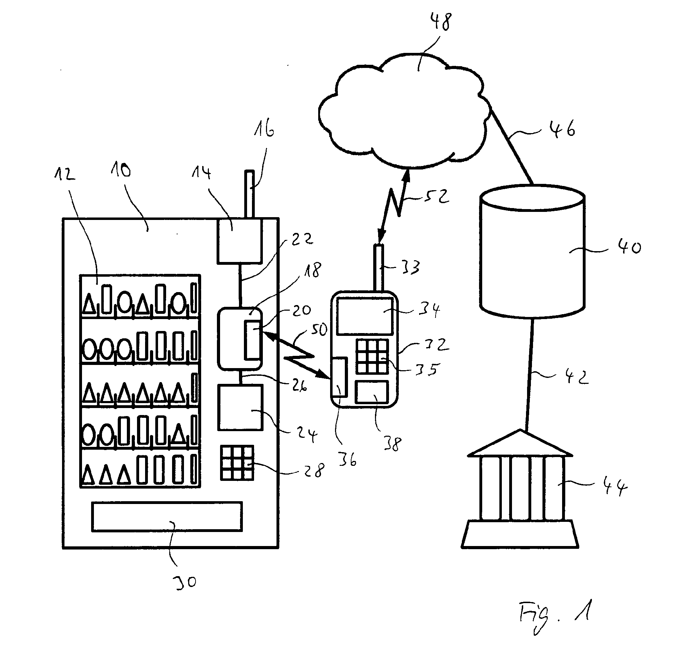

Soweit nichts anderes angegeben ist, bezeichnen in den Figuren gleiche Bezugszeichen gleiche Gegenstände. In Fig. 1 ist der Registrierprozess mittels einer Registrierapplikation für das erfindungsgemäße Bezahlverfahren veranschaulicht. Bei dem Bezugszeichen 10 ist ein Verkaufsautomat, vorliegend ein Verkaufsautomat für Lebensmittelprodukte, gezeigt. Die durch den Verkaufsautomaten 10 angebotenen Produkte befinden sich in einem Sichtbereich 12 zur Auswahl durch einen Käufer. Der Verkaufsautomat 10 besitzt darüber hinaus eine Kommunikationseinrichtung 14 mit einem Kommunikationsmittel 16, beispielsweise einer Funkantenne oder einer LAN-Verbindung für eine Datenverbindung. Weiterhin besitzt der Verkaufsautomat 10 eine Verarbeitungseinrichtung 18 mit einer Nahbereichsschnittstelle 20. Die Verarbeitungseinrichtung 18 ist über eine Leitung 22 mit der Kommunikationseinrichtung 14 verbunden. Darüber hinaus besitzt der Verkaufsautomat 10 eine der Verarbeitungseinrichtung 18 zugeordnete Steuereinrichtung 24, die über eine Leitung 26 mit der Verarbeitungseinrichtung verbunden ist. Weiterhin besitzt der Verkaufsautomat 10 ein Eingabeterminal 28, in das ein Benutzer Daten eingeben kann, zum Beispiel zur Auswahl eines Produkts. Das Eingabeterminal 28 bildet ebenfalls eine Nahbereichsschnittstelle des Verkaufsautomaten. Über ein Ausgabemodul 30 können von dem Verkaufsautomaten 10 Produkte ausgegeben werden, gesteuert durch die Steuereinrichtung 24.

Das erfindungsgemäße System umfasst darüber hinaus ein Mobilendgerät 32, vorliegend ein Mobiltelefon mit einer Mobilfunkantenne 33. Das Mobiltelefon 32, bei dem es sich insbesondere um ein Smartphone handeln kann, besitzt ebenfalls mindestens eine Nahbereichsschnittstelle 36. Darüber hinaus weist das Mobiltelefon 32 Anzeigemittel 34 und Eingabemittel 35 sowie eine Verarbeitungseinrichtung 38 auf. Die Anzeige- und Eingabemittel können beispielsweise kombiniert durch ein Touchscreendisplay gebildet sein und stellen ebenfalls Nahbereichsschnittstellen dar. Die Verarbeitungseinrichtung 38 umfasst in an sich bekannter Weise einen oder mehrere Prozessoren sowie Speichermittel, wie dies für Mobiltelefone an sich bekannt ist.

Darüber hinaus umfasst das erfindungsgemäße System eine bei dem Bezugszeichen 40 gezeigte Dienstzentrale, die vorliegend einen Server aufweist, der über eine Leitung 42 mit einem Kreditinstitut 44 verbunden ist. Darüber hinaus ist die Dienstzentrale 40 über eine Datenverbindung 46 mit einem Kommunikationsnetzwerk 48, beispielsweise einem Mobilfunknetz oder dem Internet, verbunden.

In dem in Fig. 1 gezeigten Verfahrenszustand wird in einem ersten Schritt über die Nahbereichsschnittstellen 20, 36 ein Link für eine Registrierapplikation von der Verarbeitungseinrichtung 18 des Verkaufsautomaten 10 auf das Mobiltelefon 32, insbesondere die Verarbeitungsmittel 38 übermittelt, wie durch den Pfeil 50 in Fig. 1 veranschaulicht. Der Benutzer des Mobiltelefons 32 ruft den Link anschließend auf und wird auf die Internetseite des Bezahl-Dienstleistungsanbieters für den Verkaufsautomaten 10 geleitet. Die Übertragung des Links für die Registrierapplikation erfolgt somit unabhängig von einer Mobilfunkverbindung des Mobiltelefons 32. Erst für das anschließende Ausführen der Registrierapplikation, insbesondere den Registrierprozess, muss das Mobiltelefon 32 über eine Mobilfunkverbindung verfügen. Dies kann insbesondere an einem von dem Verkaufsautomaten 10 entfernten Ort erfolgen, an dem eine ausreichende Mobilfunkverbindung besteht. Die Registrierung über die Registrierapplikation erfolgt entsprechend über eine Mobilfunkverbindung, wie in Fig. 1 bei dem Bezugszeichen 52 durch einen Pfeil veranschaulicht. Obgleich also in Fig. 1 die Übertragungen bei den Bezugszeichen 50 und 52 in einer Figur dargestellt sind, können sie erfindungsgemäß insbesondere nacheinander und an voneinander getrennten Orten erfolgen.

Im Rahmen der Registrierung werden Bezahldaten des Benutzers des Mobilendgeräts für das erfindungsgemäße Bezahlverfahren aufgenommen und in der Dienstzentrale 40 gespeichert. Dies sind insbesondere Daten zur Identifizierung des Benutzers sowie Daten zu seiner Bezahlweise, beispielsweise Bankkontodaten etc. Die im Rahmen der Registrierung aufgenommenen Daten können von der Dienstzentrale 40 über die Verbindung 42 an das Kreditinstitut 44 weitergegeben werden. Dort können sie ebenfalls gespeichert werden.

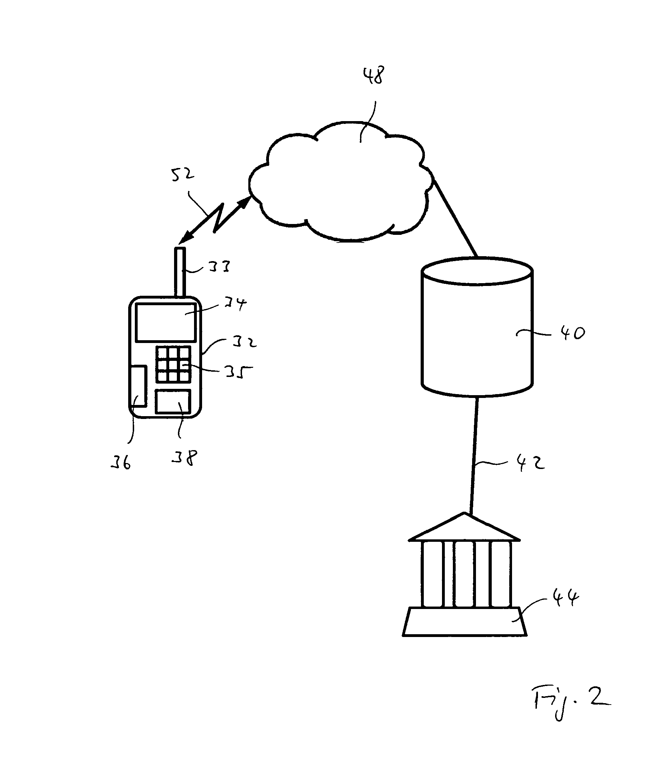

In Fig. 2 ist ein sich an die Erstregistrierung anschließender Verfahrensschritt dargestellt, in dem mindestens ein Transaktionspin für einen Bezahlvorgang auf das Mobiltelefon 32 geladen wird, und zwar über die Mobilfunkverbindung 52. Der Transaktionspin kann beispielsweise in Form einer Nummer oder eines Barcodes auf dem Mobiltelefon 32 gespeichert werden. Er enthält keine sensitiven Bezahldaten, insbesondere keine Bankkontodaten oder ähnliches des Benutzers. Der Transaktionspin kann abhängig von der gewünschten Sicherheitsstufe unterschiedlichen Beschränkungen unterliegen. So kann er beispielsweise nur bis zu einem definierten Maximalbetrag für den Kauf gültig sein. Dieser Maximalbetrag kann im vorliegenden Fall zum Beispiel so gewählt werden, dass er gleich oder höher liegt als der höchste Kaufpreis der von dem Verkaufsautomaten 10 angebotenen Produkte, so dass der Benutzer jedes Produkt an dem Verkaufsautomaten 10 erwerben kann. Darüber hinaus kann der Transaktionspin zum Beispiel nur für einen oder nur für eine festgelegte begrenzte Anzahl von Transaktionen Gültigkeit besitzen. Auch kann eine zeitliche Beschränkung für die Gültigkeit des Transaktionspins vorgesehen sein. Die entsprechenden Beschränkungen für den Transaktionspin sind in der Dienstzentrale 40 und/oder dem Kreditinstitut 44 gespeichert. Wie in Fig. 2 zu erkennen, kann das Laden eines oder mehrerer Transaktionspins unabhängig von dem Verkaufsautomaten 10 und insbesondere an einem von diesem entfernten Ort erfolgen. Es kann vor und auch nach einer Transaktion zu einer beliebigen Zeit, abhängig von der Verfügbarkeit des Mobilfunknetzes, durchgeführt werden. Das Herunterladen der Transaktionspins kann automatisch oder manuell ausgelöst erfolgen. Weiterhin kann es passwortgeschützt oder ohne Passwortschutz erfolgen. Auch kann eine Verschlüsselung der heruntergeladenen Daten des Transaktionspins vorgenommen werden. Sämtliche der vorgenannten Sicherheitsstufen können in beliebiger Weise miteinander kombiniert werden.

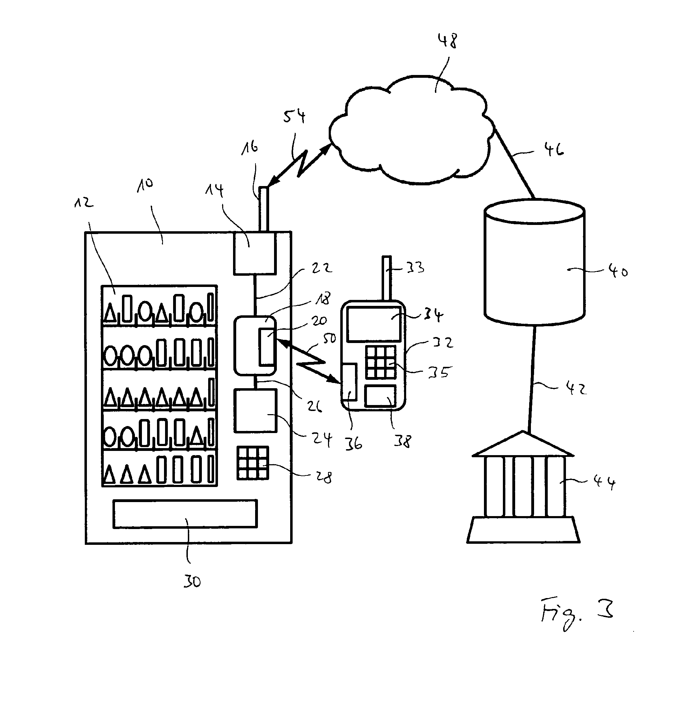

In Fig. 3 ist der Bezahlvorgang für ein Produkt veranschaulicht. Der Benutzer des Mobiltelefons 32 wählt beispielsweise über das Eingabeterminal 28 ein von ihm gewünschtes Produkt aus. Vorher oder anschließend wird per Nahbereichsschnittstellen 20, 36 ein Transaktionspin von dem Mobiltelefon 32 zu der Verarbeitungseinrichtung 18 des Verkaufsautomaten 10 übermittelt, wie durch den Pfeil 50 veranschaulicht. Die Verarbeitungseinrichtung 18 sendet den Transaktionspin über die Leitung 22 und die Kommunikationseinrichtung 14 durch eine in Fig. 3 bei dem Bezugszeichen 54 veranschaulichte Datenverbindung über das Kommunikationsnetzwerk 48 zu der Dienstzentrale 40 zur Überprüfung. Die Dienstzentrale 40 kann den Transaktionspin direkt selbst oder unter Nutzung des Kreditinstituts 44 auf Gültigkeit überprüfen. Dabei kann von der Verarbeitungseinrichtung 18 auch schon der Bezahlbetrag für das von dem Benutzer gewünschte Produkt übermittelt werden. Die Dienstzentrale 40 bzw. das Kreditinstitut 44 können dann unmittelbar die Gültigkeit für den bestimmten Verkauf prüfen.

Sofern der Transaktionspin als gültig erkannt wird, wird eine entsprechende Freigabe von der Dienstzentrale 40 über die Kommunikationseinrichtung 14 an die Verarbeitungseinrichtung 18 des Verkaufsautomaten 10 gesendet. Der Verkaufsautomat 10 gibt dann ein entsprechendes Produkt über das Ausgabemodul 30 an den Benutzer aus. Anschließend kann durch die Verarbeitungseinrichtung 18 noch eine Bestätigung an die Dienstzentrale 40 über den erfolgreich durchgeführten Verkauf gesendet werden. Daten zu den einzelnen Verkäufen können verknüpft mit den persönlichen Daten des Benutzers in der Dienstzentrale 40 oder bei dem Kreditinstitut 44 gespeichert werden. Auf dieser Grundlage kann durch den Betreiber des Verkaufsautomaten 10 eine Kundenbeziehung zu dem Benutzer aufgebaut werden. Wie sich unmittelbar aus Fig. 3 ergibt, muss das Mobiltelefon während des in Fig. 3 dargestellten Bezahlvorgangs nicht mit dem Mobilfunknetz verbunden sein. Die Überprüfung der Kreditwürdigkeit des Benutzers wird vielmehr von dem Verkaufsautomaten 10 über seine Verbindung zu der Dienstzentrale 40 durchgeführt.

## Patentansprüche

1. Verfahren zum Bezahlen von Produkten an einem Verkaufsautomaten (10) mit einem Mobilendgerät (32), wobei das Mobilendgerät (32) während des Bezahlvorgangs nicht mit einem Mobilfunknetz verbunden sein muss, umfassend die Schritte:
- über jeweils eine Nahbereichsschnittstelle (20, 36) wird von dem Mobilendgerät (32) ein Transaktionspin zu einer Verarbeitungseinrichtung (18) des Verkaufsautomaten (10) übermittelt,
- von der Verarbeitungseinrichtung (18) wird der Transaktionspin über eine Datenverbindung (54) zu einer entfernt vom Verkaufsautomaten (10) befindlichen Dienstzentrale (40) übermittelt,
- die Dienstzentrale (40) überprüft den Transaktionspin auf Gültigkeit und übermittelt bei gültigem Transaktionspin eine Freigabe für den Transaktionspin über die Datenverbindung (54) an die Verarbeitungseinrichtung (18) des Verkaufsautomaten (10),
- aufgrund eines von dem Benutzer des Mobilendgeräts (32) ausgewählten Produkts wird von der Verarbeitungseinrichtung (18) des Verkaufsautomaten (10) über die Datenverbindung (54) ein Bezahlbetrag für das ausgewählte Produkt an die Dienstzentrale (40) übermittelt,
- das von dem Benutzer des Mobilendgeräts (32) ausgewählte Produkt wird an den Benutzer des Mobilendgeräts (32) ausgeliefert.

2. Verfahren nach Anspruch 1, **dadurch gekennzeichnet, dass** der Transaktionspin nur für einen Bezahlvorgang bis zu einem Maximalbetrag gültig ist.

3. Verfahren nach Anspruch 2, **dadurch gekennzeichnet, dass** der Bezahlbetrag von der Verarbeitungseinrichtung (18) des Verkaufsautomaten (10) zusammen mit dem Transaktionspin über die Datenverbindung (54) an die Dienstzentrale (40) übermittelt wird, wobei die Dienstzentrale (40) den übermittelten Bezahlbetrag mit dem Maximalbetrag vergleicht und die Freigabe für den Transaktionspin nur übermittelt, wenn der Bezahlbetrag den Maximalbetrag nicht übersteigt.

4. Verfahren nach Anspruch 2, **dadurch gekennzeichnet, dass** die Dienstzentrale (40) bei gültigem Transaktionspin auch den Maximalbetrag über die Datenverbindung (54) an die Verarbeitungseinrichtung (18) des Verkaufsautomaten (10) übermittelt, wobei die Verarbeitungseinrichtung (18) des Verkaufsautomaten (10) den Bezahlbetrag für ein von dem Benutzer des Mobilendgeräts (32) ausgewähltes Produkt mit dem Maximalbetrag vergleicht und die Übermittlung des Bezahlbetrags an die Dienstzentrale (40) sowie die Auslieferung des Produkts nur erfolgt, wenn der Bezahlbetrag den Maximalbetrag nicht übersteigt.

5. Verfahren nach einem der vorhergehenden Ansprüche, **dadurch gekennzeichnet, dass** der Transaktionspin nur für einen Bezahlvorgang gültig ist.

6. Verfahren nach einem der vorhergehenden Ansprüche, **dadurch gekennzeichnet, dass** der Transaktionspin nur für eine begrenzte Anzahl von Bezahlvorgängen gültig ist.

7. Verfahren nach einem der vorhergehenden Ansprüche, **dadurch gekennzeichnet, dass** der Transaktionspin nur für einen begrenzten Zeitraum gültig ist.

8. Verfahren nach einem der vorhergehenden Ansprüche, **dadurch gekennzeichnet, dass** mindestens ein Transaktionspin in einem dem Bezahlvorgang vorausgehenden Verfahrensschritt von der Dienstzentrale (40) über ein Mobilfunknetz auf das Mobilendgerät (32) übertragen wird.

9. Verfahren nach Anspruch 8, **dadurch gekennzeichnet, dass** das Übertragen des mindestens einen Transaktionspins passwortgeschützt und/oder verschlüsselt erfolgt.

10. Verfahren nach einem der Ansprüche 8 oder 9, **dadurch gekennzeichnet, dass** von der Verarbeitungseinrichtung (18) des Verkaufsautomaten (10) vor dem Übertragen des mindestens einen Transaktionspins eine Registrierapplikation oder ein Link auf eine Registrierapplikation über jeweils eine Nahbereichsschnittstelle (20, 36) auf das Mobilendgerät (32) übertragen wird, wobei das anschließende Übertragen des mindestens einen Transaktionspins durch ein Ausführen der Registrierapplikation auf dem Mobilendgerät (32) gesteuert wird.

11. Verfahren nach Anspruch 10, **dadurch gekennzeichnet, dass** durch die Registrierapplikation bei erstmaliger Ausführung auf dem Mobilendgerät (32) Kreditdaten des Benutzers des Mobilendgeräts (32) aufgenommen und über ein Mobilfunknetz des Mobilendgeräts (32) an die Dienstzentrale (40) übermittelt und in der Dienstzentrale (40) gespeichert werden, insbesondere Daten zur Identifizierung des Benutzers des Mobilendgeräts (32) und/oder Bankkontodaten des Benutzers des Mobilendgeräts (32) und/oder Guthabendaten des Benutzers des Mobilendgeräts (32).

12. Verfahren nach einem der vorhergehenden Ansprüche, **dadurch gekennzeichnet, dass** das Mobilendgerät (32) ein Mobiltelefon, ein Personal Digital Assistant (PDA) oder ein Tablet-Computer ist.

13. Verfahren nach einem der vorhergehenden Ansprüche, **dadurch gekennzeichnet, dass** die Übermittlung des Transaktionspins und/oder der Registrierapplikation und/oder des Links für die Registrierapplikation über die Nahbereichsschnittstellen (20, 36) per Near-Field-Communication (NFC), BlueTooth-Übertragung, Infrarot-Übertragung, Auslesen eines RFID-Transponders, Auslesen eines Barcodes, per Wireless-Netzwerk oder per Eingabe in ein Eingabeterminal (28) erfolgt.

14. System zum Bezahlen von Produkten an einem Verkaufsautomaten (10) mit einem Mobilendgerät (32), wobei das Mobilendgerät (32) während des Bezahlvorgangs nicht mit einem Mobilfunknetz verbunden sein muss, umfassend:
- ein Mobilendgerät (32) mit einer Nahbereichsschnittstelle (36) und einen Verkaufsautomaten (10) mit einer Verarbeitungseinrichtung (18) und einer Nahbereichsschnittstelle (20), wobei die Verarbeitungseinrichtung (18) dazu ausgebildet ist, über die Nahbereichsschnittstellen (20, 36) einen Transaktionspin von dem Mobilendgerät (32) zu empfangen,
- eine entfernt vom Verkaufsautomaten (10) befindliche Dienstzentrale (40), wobei zwischen dem Verkaufsautomaten (10) und der Dienstzentrale (40) eine Datenverbindung (54) besteht, und wobei die Verarbeitungseinrichtung (18) dazu ausgebildet ist, den Transaktionspin über die Datenverbindung (54) zu der Dienstzentrale (40) zu übermitteln,
- wobei die Dienstzentrale (40) dazu ausgebildet ist, den Transaktionspin auf Gültigkeit zu überprüfen und bei gültigem Transaktionspin eine Freigabe für den Transaktionspin über die Datenverbindung (54) an die Verarbeitungseinrichtung (18) des Verkaufsautomaten (10) zu übermitteln,
- wobei die Verarbeitungseinrichtung (18) weiter dazu ausgebildet ist, aufgrund eines von dem Benutzer des Mobilendgeräts (32) ausgewählten Produkts über die Datenverbindung (54) einen Bezahlbetrag für das ausgewählte Produkt an die Dienstzentrale (40) zu übermitteln, und
- wobei der Verkaufsautomat (10) dazu ausgebildet ist, das von dem Benutzer des Mobilendgeräts (32) ausgewählte Produkt an den Benutzer des Mobilendgeräts (32) auszuliefern.

15. System nach Anspruch 14, **dadurch gekennzeichnet, dass** die Nahbereichsschnittstellen (20, 36) Near-Field-Communication-Schnittstellen (NFC), BlueTooth-Schnittstellen, Infrarot-Schnittstellen, Schnittstellen zum Auslesen eines RFID-Transponders, Schnittstellen zum Auslesen eines Barcodes, Wireless-Schnittstellen oder ein Eingabeterminal (28) umfassen.

16. System nach einem der Ansprüche 14 oder 15, **dadurch gekennzeichnet, dass** der Transaktionspin nur für einen Bezahlvorgang bis zu einem Maximalbetrag gültig ist.

17. System nach einem der Ansprüche 14 bis 16, **dadurch gekennzeichnet, dass** der Transaktionspin nur für einen Bezahlvorgang gültig ist.

18. System nach einem der Ansprüche 14 bis 17, **dadurch gekennzeichnet, dass** der Transaktionspin nur für eine begrenzte Anzahl von Bezahlvorgängen gültig ist.

19. System nach einem der Ansprüche 14 bis 18, **dadurch gekennzeichnet, dass** der Transaktionspin nur für einen begrenzten Zeitraum gültig ist.

20. System nach einem der Ansprüche 14 oder 15, **dadurch gekennzeichnet, dass** das System zur Durchführung des Verfahrens nach einem der Ansprüche 1 bis 13 geeignet ist.

21. System nach einem der Ansprüche 14 bis 20, **dadurch gekennzeichnet, dass** das Mobilendgerät (32) ein Mobiltelefon, ein Personal Digital Assistant (PDA) oder ein Tablet-Computer ist.
